# EUROPEAN PATENT SPECIFICATION

(11) **EP 1 280 299 B1**
(45) Date of publication and mention of the grant of the patent: **12.01.2005**
(21) Application number: 02005775.8
(22) Date of filing: 13.03.2002
(51) Int. Cl.: H04L 12/28, H04M 11/06, H04L 12/413, G05B 19/04

(54) **System and method for controlling home appliances via a home phone line**
System und Verfahren zur Steuerung von Heimgeräten mittels einer Haustelefonleitung
Système et procédé de contrôle d' appareils domestiques par l'intermédiaire d' une ligne téléphonique locale

(30) Priority: 20.07.2001 KR 2001043715
(43) Date of publication of application: 29.01.2003
(73) Proprietor: LG Electronics Inc., Seoul 150-010 (KR)
(72) Inventor: Yoon, Sang Chul, Koyang-si, Kyungki-do 411-410 (KR); Jeon, Duck Goo, Sungdong-ku, Seoul 133-070 (KR)
(74) Representative: Urner, Peter, Dipl.-Phys.

(56) References cited:
- EP-A- 1 085 728
- WO-A-00/04427
- WO-A-01/24480
- WO-A-01/50706
- US-A- 6 026 150
- ANONYMOUS: "Create your own Home network, instantly. Ethernet to Phone Line Bridge" NETGEAR PRODUCT DATA SHEET, [Online] October 2000 (2000-10), pages 1-2, XP002212019 Retrieved from the Internet: <URL:www.netgear.com/pdf_docs/PE102.PS.FIN AL.pdf> [retrieved on 2002-09-03]
- ANONYMOUS: "Phoneline 10M Cable/DSL Router" HOMELINK SERIES, LINKSYS PRODUCT USER GUIDE, [Online] 2001, pages 1-51, XP002212020 Retrieved from the Internet: <URL:ftp://ftp.linksys.com/pdf/hpro200ug.p df> [retrieved on 2002-09-03]
- MINASSIAN G.: "Home phone Line Networks: the next networking challenge" EUROPEAN ELECTRONICS ENGINEER, January 1999 (1999-01), pages 68-71, XP001099120

## Description

### BACKGROUND OF THE INVENTION

### Field of the Invention

The present invention relates to a system and method for controlling home appliances, and more particularly to a system and method for controlling a plurality of home appliances through a phoneline network alliance (PNA) previously installed in a building.

### Description of the Related Art

A home appliance networking system has recently been highlighted in which a plurality of home appliances are interconnected via an internal network of a home or building, which is in turn connected to an external Internet network, thereby enabling a user to control the home appliances from anywhere inside and outside of the home or building.

In the home appliance networking system, particularly, the user can not only recognize state information of a specific home appliance at any place inside of the home or building, but also control the specific home appliance using control means, such as a computer, at any place outside of the home or building. In this regard, the home appliance networking system has obtained favorable responses from many consumers, and thus has become more widespread in its application day by day.

However, the above-mentioned home appliance networking system has a disadvantage in that a local area network (LAN) must be constructed in the home or building to interconnect the home appliances via the internal network of the home or building and integratedly control the interconnected appliances, resulting in a great cost being incurred.

In other words, even though the user intends to install the home appliances in the existing building and control them via the internal network of the building, he/she will be unable to attain his/her intention as long as the internal network is not equipped with a LAN line, etc. For the purpose of attaining the user's intention, a separate network must be constructed in the building, thereby increasing a cost required for installing the home appliances.

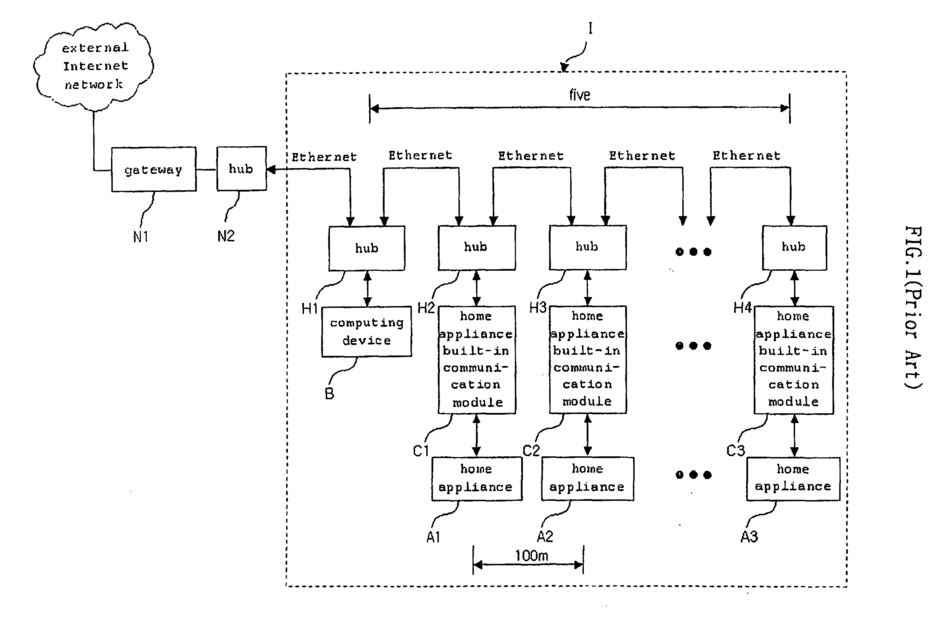

Furthermore, even in the case where the internal network of the building is equipped with a LAN line, etc., the home appliances must be interconnected via hubs at limited distances, as shown in Fig. 1.

Fig. 1 shows the construction of a conventional home appliance control system. As shown in this drawing, an Internet network outside of a building (referred to hereinafter as an "external Internet network") is connected to an Internet network I inside of the building (referred to hereinafter as an "internal Internet network") via networking equipment such as a gateway N1 and hub N2. The internal Internet network I comprises a computing device B having such a public Internet protocol (IP) address as to be accessible by the external Internet network. The computing device B is adapted to assign respective private IP addresses to a plurality of home appliances A1, A2 and A3 and transfer control information from the external Internet network to the home appliances A1, A2 and A3. To this end, the computing device B may include, for example, a server. A plurality of home appliance built-in communication modules C1, C2 and C3 are installed respectively in the home appliances A1, A2 and A3 to convert formats of information, transmitted and received between corresponding ones of the home appliances A1, A2 and A3 and the external Internet network on the basis of the private IP addresses assigned by the computing device B, into standard formats of the corresponding home appliances and a standard format of the external Internet network, respectively. A plurality of hubs H1, H2, H3 and H4 are provided to interconnect the computing device B and the home appliance built-in communication modules C1, C2 and C3.

However, the interconnection of the computing device B and home appliance built-in communication modules C1, C2 and C3 using the plurality of hubs H1, H2, H3 and H4 is subject to limitations by Ethernet standards and hub structures. Because of such limitations, the number of communication modules connectable via the hubs is 5 at maximum and the distance between adjacent ones of the communication modules is 100m at maximum.

Document XP2212019, "Ethernet to Phone Line Bridge" from NETGEAR, is considered to be the closest prior art and discloses a system comprising a router, an Ethernet to phone line bridge and phone line to USB adapters allowing to connect multiple PCs within a building and to the Internet via the existing in-house phone lines. The use of such a home phone network alliance (home PNA or HPNA) allows to overcome Ethernet distance limitations and to reuse existing cabling.

Document WO-A-01/50706 discloses a communication system comprising a cable modem which converts internet traffic into a home network format (e.g. HPNA, USB, or Ethernet). It allows to control remotely home appliances from the Internet and forward the control information after IP address matching verifications.

Document US 6026150 A discloses a home network which connects individually addressable consumer electronic devices via the in-house phone line, each device including a modem.

Document WO-A-01/24480 discloses a router connecting a home phoneline network to the internet via a digital subscriber line.

Document WO-A-00/04427 discloses a method and apparatus for remotely controlling electrical appliances using a virtual internet link.

Document EP-A-1085728 discloses a method and apparatus for connecting computers to the internet, said computers being allocated private addresses and said apparatus having a single public address.

Document XP2212020, "Phoneline 10M Cable/DSL Router" from LINKSYS, was published in the Internet in 2001, that is possibly after the priority date of the present application. It discloses a cable/DSL router for home phoneline network.

### SUMMARY OF THE INVENTION

Therefore, the present invention has been made in view of the above problems, and it is an object of the present invention to provide a system and method which are capable of controlling a plurality of home appliances installed in a building through a PNA previously installed in the building and overcoming a distance limitation when the home appliances are interconnected, thereby enabling the home appliances to be controlled efficiently even at a low cost.

This object is achieved by a system having the features of claim 1 and a method according to claim 7. Advantageous embodiments thereof are defined in the respective dependent claims.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a block diagram showing the construction of a conventional home appliance control system;
Fig. 2 is a block diagram showing the construction of a home appliance control system in accordance with the present invention; and
Fig. 3 is a flow chart illustrating a method for controlling home appliances in accordance with the present invention.

### DESCRIPTION OF THE PREFERRED EMBODIMENTS

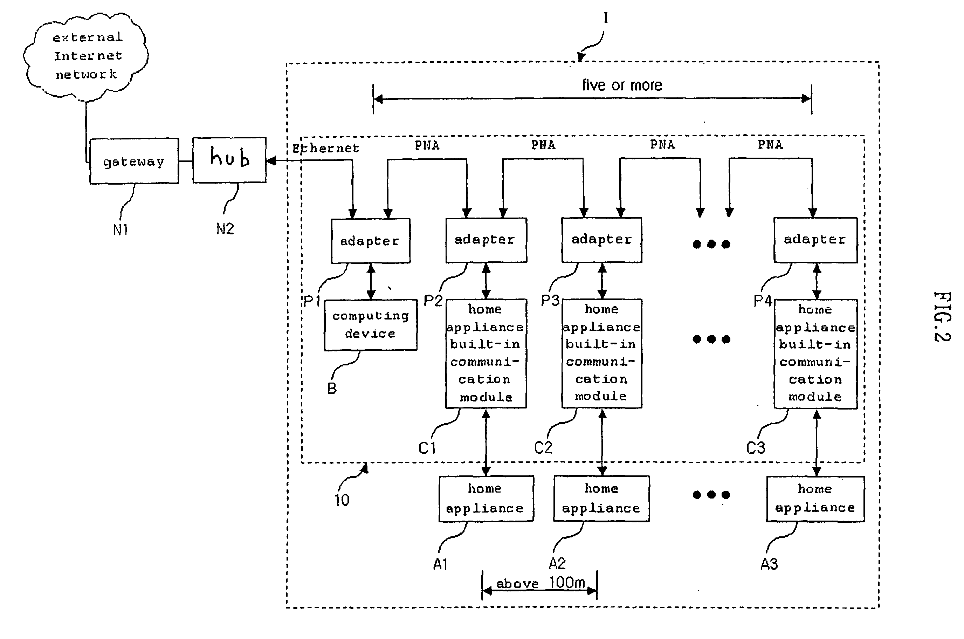

With reference to Fig. 2, there is shown in block form the construction of a home appliance control system in accordance with the present invention. As shown in this drawing, the home appliance control system comprises networking equipment for interconnecting an Internet network outside of a building (referred to hereinafter as an "external Internet network") and a network I inside of the building (referred to hereinafter as an "internal network"). The networking equipment is preferably provided with a gateway N1 and hub N2. Phoneline network alliance (PNA) connection equipment 10 is provided in the internal network I to transmit and receive data between the networking equipment and a PNA installed in the building and connect the PNA to a plurality of home appliances A1, A2 and A3 installed in the building.

The PNA connection equipment 10 includes a computing device B having such a public Internet protocol (IP) address that it is accessible by the external Internet network via the networking equipment. The computing device B is adapted to assign respective private IP addresses to the plurality of home appliances A1, A2 and A3. To this end, the computing device B preferably includes a server. A plurality of home appliance built-in communication modules C1, C2 and C3 are installed respectively in the home appliances A1, A2 and A3 to store the private IP addresses of corresponding ones of the home appliances A1, A2 and A3, assigned by the computing device B, and convert formats of information, transmitted from the external Internet network to the corresponding home appliances on the basis of the stored private IP addresses, into standard formats of the corresponding appliances such that the transmitted information can be received by the corresponding appliances. The PNA connection equipment 10 further includes a plurality of adapters P1, P2, P3 and P4 for connecting the computing device B and home appliance built-in communication modules C1, C2 and C3 to the PNA installed in the building, respectively. The adapters P1, P2, P3 and P4 are further adapted to convert formats of information transmitted and received between the computing device B and communication modules C1, C2 and C3 and the PNA into an Ethernet standard format and a standard format of the PNA, respectively.

The adapters P1, P2, P3 and P4 are preferably protocol conversion adapters. Namely, the adapters convert information of the PNA standard format from the PNA into information of the Ethernet standard format and transfer the format-converted information to the computing device B and home appliance built-in communication modules C1, C2 and C3, respectively. Further, the adapters convert information of the Ethernet standard format from the computing device B and communication modules C1, C2 and C3 into information of the PNA standard format and transfer the format-converted information to the PNA, respectively.

Therefore, as compared with the conventional use of hubs which allows a maximum of five home appliances to be interconnected at an inter-distance of within 100m, the use of adapters according to the present invention enables five or more home appliances, the adjacent ones of which are spaced apart from each other at a distance of above 100m, to be connected to the PNA and all efficiently controlled.

The adapter P1, which connects the computing device B to the PNA, also functions to transmit and receive information of the Ethernet standard format between the computing device B and the networking equipment. The adapter P1 further functions to convert formats of information, transmitted and received between the computing device B and the home appliances A1, A2 and A3 via the PNA, into the PNA standard format and the Ethernet standard format, respectively. As a result, the computing device B can transmit and receive information of the Ethernet standard format via the PNA, too.

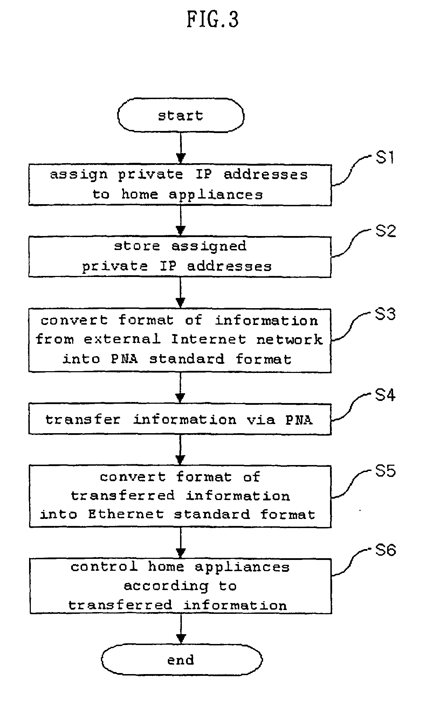

The operation of the home appliance control system with the above-stated construction in accordance with the present invention will hereinafter be described in detail with reference to Fig. 3.

First, at the first step S1, the computing device B assigns private IP addresses to the plurality of home appliances A1, A2 and A3 in the building, respectively.

At the second step S2, the home appliance built-in communication modules C1, C2 and C3 installed in the home appliances A1, A2 and A3 store the private IP addresses assigned by the computing device B, respectively.

At the third step S3, the adapter P1 receives information which is applied from the external Internet network via the computing device B to control the home appliances A1, A2 and A3, or information which is applied directly to the home appliances A1, A2 and A3 via the computing device B and converts a format of the received information into the PNA standard format.

Note that a user, when being outside of the building, can gain access to the computing device B using the public IP address thereof to control the plurality of home appliances A1, A2 and A3 through the external Internet network. After accessing the computing device B using the public IP address thereof, the user outside of the building can enter control information about a specific one of the home appliances to be controlled, to the computing device B, and the computing device B can thus control the specific home appliance according to the entered control information.

At the fourth step S4, the information format-converted at the above third step S3 is transferred to the home appliances A1, A2 and A3 via the PNA in the internal network I of the building.

At the fifth step S5, the adapters P2, P3 and P4, which are connected respectively to the home appliance built-in communication modules C1, C2 and C3, convert the PNA standard format of the PNA information to be transferred to the home appliances A1, A2 and A3, into the Ethernet standard format. It should be noted here that the information to be transferred to the home appliances A1, A2 and A3 contains information regarding the private IP address of the specific home appliance to be controlled. In this connection, upon receiving the information format-converted by the adapters P2, P3 and P4, each of the home appliance built-in communication modules C1, C2 and C3 converts the Ethernet standard format of the received information into a standard format of a corresponding one of the home appliances A1, A2 and A3 and transfers the resulting information to the corresponding home appliance only when the private IP address contained in the received information is the same as that of the corresponding appliance.

At the sixth step S6, the information format-converted at the above fifth step S5 is transferred to the respective home appliances A1, A2 and A3 through the respective communication modules C1, C2 and C3, so as to control the home appliances A1, A2 and A3.

As apparent from the above description, the present invention provides a system and method for controlling a plurality of home appliances installed in a building, wherein home appliance built-in communication modules are each adapted to convert information of an Ethernet standard format into that of a home appliance standard format and adapters are adapted to connect the home appliance built-in communication modules to a phoneline network alliance (PNA) previously installed in the building to transmit and receive information therebetween. Therefore, the home appliances installed in the building can be controlled over a network using an existing telephone line, with no necessity for installing a separate local area network (LAN) line, resulting in a reduction in installation cost. Further, the use of the adapters enables the plurality of home appliances to be interconnected with no distance limitation. Therefore, the plurality of home appliances in the building can be efficiently controlled.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A home appliance control system comprising:
- at least one home appliance (A1, A2, A3, A4) installed in a building;
- a home network according to the PNA standard installed in the building;
- said PNA home network is adapted to be coupled to an external Internet network constructed outside of the building;
- said home appliance (A1, A2, A3, A4) is controlled in response to control information sent over the Internet, said home appliance (A1, A2, A3, A4) generating information about its controlled state and sending the generated state information over the Internet; and
- PNA home network connection means for connecting said home appliance (A1, A2, A3, A4) to said PNA home network such that said home appliance (A1, A2, A3, A4) transmits and receives said state information and control information via said PNA home network;
- networking means (N1, N2) for connecting said PNA home network connection means to said external Internet network and controlling the connection such that said PNA home network is connected to said external Internet network;
- the PNA home network includes
- a first adapter (P1) for converting formats of information transmitted and received between a computing device (B) and said PNA home network into an Ethernet standard format and a standard format of said PNA home network, respectively;
**characterized in that**
- said PNA home network further includes:
- a second adapter (P2, P3, P4) for converting formats of information transmitted and received between said home appliance (A1, A2, A3, A4) and said PNA home network into the Ethernet standard format and the PNA home network standard format, respectively; and
- said computing device (B) being configured to assign a private Internet protocol (IP) address to said home appliance (A1, A2, A3. A4); and
- a home appliance built-in communication module (C1, C2, C3, C4) for storing said private IP address assigned by said computing device, connecting said second adapter (P2, P3, P4) to said home appliance (A1, A2, A3, A4) and converting data of said Ethernet standard format from said second adapter (P2, P3, P4) into that of a standard format of said home appliance (A1, A2, A3, A4).

2. The home appliance control system as set forth in claim 1, wherein said second adapter (P2, P3, P4) is connected to said home appliance built-in communication module (C1, C2, C3, C4) to connect said home appliance (A1, A2, A3, A4) to said PNA home network so as to enable transmission and reception of data of said Ethernet standard format between said home appliance (A1, A2, A3, A4) and said PNA home network.

3. The home appliance control system as set forth in claim 1, wherein said first adapter (P1) is adapted to connect said computing device (B) to said networking means (N1, N2) and said PNA home network, respectively, and to convert formats of data transmitted and received between said computing device (B) and said networking means (N1, N2) into said Ethernet standard format, a format of data transmitted from said computing device (B) to said PNA home network into said PNA home network standard format, and a format of data transmitted from said PNA home network to said computing device (B) into said Ethernet standard format, respectively.

4. The home appliance control system as set forth in claim 1, wherein said computing device (B) has a public IP address such that it is accessible by said external Internet network.

5. The home appliance control system as set forth in claim 1, wherein said home appliance built-in communication module (C1, C2, C3, C4) is adapted to receive said control information through said second adapter (P2, P3, P4), convert a format of the received control information into said home appliance standard format only when it contains information regarding the same private IP address as that stored therein, and transfer the resulting control information to said home appliance (A1, A2, A3, A4).

6. The home appliance control system as set forth in claim 1, wherein said networking means (N1, N2) includes: a gateway (N1) acting as an ingress for connecting said external Internet network to said PNA home network; and a hub (N2) for transferring data from said gateway (N1) to said PNA home network connection means.

7. A method for controlling at least one home appliance (A1, A2, A3, A4) installed in a building, comprising the steps of:
a) converting a format of information sent from an external Internet network constructed outside of the building into the standard format of a PNA home network previously installed in the building;
b) transmitting said information format-converted at said step a) through said PNA home network;
**characterized by**
c) converting the PNA home network standard format of said information transmitted at said step b) into an Ethernet standard format; and
d) controlling said home appliance (A1, A2, A3, A4) according to said information format-converted at said step c).
e) after said step c) is performed, converting the Ethernet standard format of said information format-converted at said step c) into a standard format of said home appliance (A1, A2, A3, A4) such that said information format-converted at said step c) is processable by said home appliance (A1, A2, A3, A4)
f) assigning a private Internet protocol (IP) address to said home appliance (A1, A2, A3, A4); and
g) storing the assigned private IP address in said home appliance (A1, A2. A3, A4); whereby said information format-converted at said step c) contains information regarding the same private IP address as that stored in said home appliance (A1, A2, A3, A4).

## Patentansprüche

1. Hausanlagen-Steuersystem, das umfasst:
- wenigstens eine Hausanlage (A1, A2, A3, A4), die in einem Gebäude installiert ist;
- ein Heimnetz nach PNA-Norm, das in dem Gebäude installiert ist;
- wobei das PNA-Heimnetz so beschaffen ist, dass es mit einem externen Internet-Netz, das außerhalb des Gebäudes konstruiert ist, gekoppelt werden kann;
- wobei die Heimanlage (A1, A2, A3, A4) in Reaktion auf Steuerinformationen, die über das Internet gesendet werden, gesteuert wird, wobei die Heimanlage (A1, A2, A3, A4) Informationen über ihren gesteuerten Zustand erzeugt und die erzeugten Zustandsinformationen über das Internet sendet; und
- PNA-Heimnetz-Anschlussmittel zum Verbinden der Heimanlage (A1, A2, A3, A4) mit dem PNA-Heimnetz, so dass die Heimanlage (A1, A2, A3, A4) die Zustandsinformationen und Steuerinformationen über das PNA-Heimnetz sendet und empfängt;
- Netzmittel (N1, N2) zum Verbinden der PNA-Heimnetz-Verbindungsmittel mit dem externen Internet-Netz und zum Steuern der Verbindung in der Weise, dass das PNA-Heimnetz mit dem externen Internet-Netz verbunden ist;
- wobei das PNA-Heimnetz umfasst:
- einen ersten Adapter (P1) zum Umsetzen von Formaten der Informationen, die zwischen einer Rechenvorrichtung (B) und dem PNA-Heimnetz gesendet und empfangen werden, in ein Ethernet-Standardformat bzw. in ein Standardformat des PNA-Heimnetzes;
**dadurch gekennzeichnet, dass**
- das PNA-Heimnetz ferner umfasst:
- einen zweiten Adapter (P2, P3, P4) zum Umsetzen von Formaten der Informationen, die zwischen der Heimanlage (A1, A2, A3, A4) und dem PNA-Heimnetz gesendet und empfangen werden, in das Ethernet-Standardformat bzw. in das PNA-Heimnetz-Standardformat; und
- wobei die Rechenvorrichtung (B) so konfiguriert ist, dass sie der Heimanlage (A1, A2, A3, A4) eine private Internetprotokoll-Adresse (private IP-Adresse) zuweist; und
- ein in die Heimanlage eingebautes Kommunikationsmodul (C1, C2, C3, C4) zum Speichern der privaten IP-Adresse, die von der Rechenvorrichtung zugewiesen wird, zum Verbinden des zweiten Adapters (P2, P3, P4) mit der Heimanlage (A1, A2, A3, A4) und zum Umsetzen von Daten des Ethernet-Standardformats von dem zweiten Adapter (P2, P3; P4) in Daten eines Standardformats der Heimanlage (A1, A2, A3, A4).

2. Heimanlagen-Steuersystem nach Anspruch 1, bei dem der zweite Adapter (P2, P3, P4) mit dem in die Heimanlage eingebauten Kommunikationsmodul (C1, C2, C3, C4) verbunden ist, um die Heimanlage (A1, A2, A3, A4) mit dem PNA-Heimnetz zu verbinden, um so das Senden und Empfangen von Daten des Ethernet-Standardformats zwischen der Heimanlage (A1, A2, A3, A4) und dem PNA-Heimnetz zu ermöglichen.

3. Heimanlagen-Steuersystem nach Anspruch 1, bei dem der erste Adapter (P1) so beschaffen ist, dass er die Rechenvorrichtung (B) mit den Netzmitteln (N1, N2) bzw. mit dem PNA-Heimnetz verbindet und Formate von Daten, die zwischen der Rechenvorrichtung (B) und den Netzmitteln (N1, N2) gesendet und empfangen werden, in das Ethernet-Standardformat umsetzt, ein Format von Daten, die von der Rechenvorrichtung (B) an das PNA-Heimnetz gesendet werden, in das PNA-Heimnetz-Standardformat umsetzt und ein Format von Daten, die von dem PNA-Heimnetz zu der Rechenvorrichtung (B) gesendet werden, in das Ethernet-Standardformat umsetzt.

4. Heimanlagen-Steuersystem nach Anspruch 1, bei dem die Rechenvorrichtung (B) eine öffentliche IP-Adresse hat, so dass auf sie durch das externe Internet-Netz zugegriffen werden kann.

5. Heimanlagen-Steuersystem nach Anspruch 1, bei dem das in die Heimanlage eingebaute Kommunikationsmodul (C1, C2, C3, C4) so beschaffen ist, dass es die Steuerinformationen über den zweiten Adapter (P2, P3, P4) empfängt, ein Format der empfangenen Steuerinformationen in das Heimanlagen-Standardformat nur dann umsetzt, wenn sie Informationen hinsichtlich derselben privaten IP-Adresse wie jene, die darin gespeichert ist, enthalten, und die resultierenden Steuerinformationen an die Heimanlage (A1, A2, A3, A4) überträgt.

6. Heimanlagen-Steuersystem nach Anspruch 1, bei dem die Netzmittel (N1, N2) enthalten: ein Gateway (N1), das als ein Eintrittselement wirkt, um das externe Internet-Netz mit dem PNA-Heimnetz zu verbinden; und einen Hub (N2), um Daten von dem Gateway (N1) an die PNA-Heimnetz-Verbindungsmittel zu übertragen.

7. Verfahren zum Steuern wenigstens einer Heimanlage (A1, A2, A3, A4), die in einem Gebäude installiert ist, das die folgenden Schritte umfasst:
a) Umsetzen eines Formats von Informationen, die von einem externen Internet-Netz, das außerhalb des Gebäudes konstruiert ist, gesendet werden, in das Standardformat eines PNA-Heimnetzes, das vorher in dem Gebäude installiert worden ist; und
b) Senden der Informationen, deren Format im Schritt a) umgesetzt wurde, über das PNA-Heimnetz;
**gekennzeichnet durch**
c) Umsetzen des PNA-Heimnetz-Standardformats der im Schritt b) gesendeten Informationen in ein Ethernet-Standardformat; und
d) Steuern der Heimanlage (A1, A2, A3, A4) entsprechend den Informationen, deren Format im Schritt c) umgesetzt wurde,
e) nach Ausführung des Schrittes c) Umsetzen des Ethernet-Standardformats der Informationen, deren Format im Schritt c) umgesetzt wurde, in ein Standardformat der Heimanlage (A1, A2, A3, A4), so dass die Informationen, deren Format im Schritt c) umgesetzt wurde, **durch** die Heimanlage (A1, A2, A3, A4) verarbeitet werden können,
f) Zuweisen einer privaten Internetprotokoll-Adresse (private IP-Adresse) an die Heimanlage (A1, A2, A3, A4); und
g) Speichern der zugewiesenen privaten IP-Adresse in der Heimanlage (A1, A2, A3, A4); wobei die Informationen, deren Format im Schritt c) umgesetzt wurde, Informationen hinsichtlich derselben privaten IP-Adresse wie jene, die in der Heimanlage (A1, A2, A3, A4) gespeichert ist, enthalten.

## Revendications

1. Un système de contrôle d'appareil domestique, comprenant :
- au moins un appareil domestique (A1, A2, A3, A4) installé dans un bâtiment;
- un réseau domestique, selon le standard PNA, installé dans le bâtiment ;
- ledit réseau domestique PNA étant adapté à être couplé à un réseau Internet externe, construit à l'extérieur du bâtiment ;
- ledit appareil domestique (A1, A2, A3, A4) est commandé en réponse à une information de commande envoyée sur l'Internet, ledit appareil domestique (A1, A2, A3, A4) générant une information au sujet de son état de commande et envoyant l'information d'état générée sur l'Internet ; et
- des moyens de connexion au réseau domestique PNA pour connecter ledit appareil domestique (A1, A2, A3, A4) audit réseau domestique PNA, de manière que ledit appareil domestique (A1, A2, A3, A4) émette et reçoive lesdites information d'état et information de commande via ledit réseau domestique PNA ;
- des moyens de mise en réseau (N1, N2) pour connecter lesdits moyens de connexion au réseau domestique PNA audit réseau Internet externe et commander la connexion, de manière que ledit réseau domestique PNA soit connecté audit réseau Internet externe ;
- le réseau domestique PNA comprend
- un premier adaptateur (P1) pour convertir des formats d'information, émise et reçue entre un dispositif de calcul (B) et ledit réseau domestique PNA, en un format de standard Éthernet et un format standard dudit réseau domestique PNA, respectivement ;
**caractérisé en ce que**
- ledit réseau domestique PNA comprend en outre :
- un deuxième adaptateur (P2, P3, P4) pour la conversion de formats d'information, émise et reçue entre ledit appareil domestique (A1, A2, A3, A4) et ledit réseau domestique PNA, au format standard Éthernet et au format standard de réseau domestique PNA, respectivement ; et
- ledit dispositif de calcul (B) étant configuré pour affecter une adresse de protocole Internet (IP) privée audit appareil domestique (A1, A2, A3, A4) ; et
- un module de communication intégré dans un appareil domestique (C1, C2, C3, C4) pour stocker ladite adresse IP privée, affectée par le dispositif de calcul, connecter ledit deuxième adaptateur (P2, P3, P4) audit appareil domestique (A1, A2, A3, A4), et convertir les données dudit format standard Éthernet dudit deuxième adaptateur (P2, P3, P4) en celui d'un format standard dudit appareil domestique (A1, A2, A3, A4).

2. Le système de contrôle d'appareil domestique selon la revendication 1, dans lequel ledit deuxième adaptateur (P2, P3, P4) est connecté audit module de communication intégré à un appareil domestique (C1, C2, C3, C4) pour connecter ledit appareil domestique (A1, A2, A3, A4) audit réseau domestique PNA de sorte à permettre l'émission et la réception de données dudit format standard Ethernet, entre ledit appareil domestique (A1, A2, A3, A4) et ledit réseau domestique PNA.

3. Le système de contrôle d'appareil domestique selon la revendication 1, dans lequel ledit premier adaptateur (P1) est adapté à connecter ledit dispositif de calcul (B) auxdits moyens de mise en réseau (N1, N2) et audit réseau domestique PNA, respectivement, et à convertir des formats de données émis et reçu entre ledit dispositif de calcul (B) et lesdits moyens de mise en réseau (N1, N2) audit format standard Éthernet, un format de données, émises depuis ledit dispositif de calcul (B) audit réseau domestique PNA, en un format standard de réseau domestique PNA, et un format de données, transmises dudit réseau domestique PNA audit dispositif de calcul (B), en ledit format standard Éthernet, respectivement.

4. Le système de contrôle d'appareil domestique selon la revendication 1, dans lequel ledit dispositif de calcul (B) présente une adresse IP publique de manière à ce qu'elle soit accessible par ledit réseau Internet externe.

5. Le système de contrôle d'appareil domestique selon la revendication 1, dans lequel ledit module de communication intégré à un appareil domestique (C1, C2, C3, C4) est adapté à recevoir ladite information de commande par ledit deuxième adaptateur (P2, P3, P4), convertir un format de l'information de contrôle reçu en un format standard pour appareil domestique, uniquement lorsqu'elle contient une information concernant la même adresse IP privée que celle y étant stockée, et transférer l'information de commande résultante vers ledit appareil domestique (A1, A2, A3, A4).

6. Le système de contrôle d'appareil domestique selon la revendication 1, dans lequel lesdits moyens de mise en réseau (N1, N2) comprennent: une passerelle (N1), agissant en tant qu'entrée pour connecter ledit réseau Internet externe audit réseau domestique PNA ; et un concentrateur (N2), pour transférer des données depuis ladite passerelle (N1) vers lesdits moyens de connexion de réseau domestique PNA.

7. Un procédé de commande d'au moins un appareil domestique (A1, A2, A3, A4) installé dans un bâtiment, comprenant les étapes consistant à :
a) convertir un format d'information envoyé depuis un réseau Internet externe, construit à l'extérieur du bâtiment, au format standard d'un réseau domestique PNA antérieurement installé dans le bâtiment ;
b) transmettre ladite information, dont le format a été converti, à ladite étape a) par ledit réseau domestique PNA ;
**caractérisé par** le fait de
c) convertir ledit format standard pour réseau domestique PNA de ladite information transmise à ladite étape b) en un format standard Éthernet ; et
d) commander ledit appareil domestique (A1, A2, A3, A4) selon ladite information ayant subi une conversion de format, à ladite étape c).
e) après avoir effectué ladite étape c), convertir le format standard Éthernet de ladite information dont le format a été converti, à ladite étape c), en un format standard dudit appareil domestique (A1, A2, A3, A4), de manière que ladite information, dont le format a été converti à ladite étape c), puisse être traitée par ledit appareil domestique (A1, A2, A3, A4)
f) affecter une adresse de protocole Internet (IP) privée audit appareil domestique (A1, A2, A3, A4) ; et
g) stocker l'adresse IP privée affectée dans ledit appareil domestique (A1, A2, A3, A4) ; de manière que ladite information, dont le format a été converti à ladite étape c), contienne une information concernant la même adresse IP privée que celle stockée dans ledit appareil domestique (A1, A2, A3, A4).
